# EUROPÄISCHE PATENTSCHRIFT

(11) **EP 2 593 337 B1**
(45) Veröffentlichungstag und Bekanntmachung des Hinweises auf die Patenterteilung: **27.01.2016**
(21) Anmeldenummer: 11720305.9
(22) Anmeldetag: 20.05.2011
(51) Int. Cl.: B60R 21/0134

(54) **VERFAHREN ZUM SCHUTZ EINES FAHRZEUGINSASSEN, STEUERGERÄT ZUR ANSTEUERUNG EINER AKTUATORIK ZUM SCHUTZ EINES FAHRZEUGINSASSEN UND SYSTEM MIT EINEM SOLCHEN STEUERGERÄT UND EINER ENTSPRECHENDEN AKTUATORIK**
METHOD FOR PROTECTING A VEHICLE OCCUPANT, CONTROL UNIT FOR ACTIVATING AN ACTUATOR SYSTEM FOR PROTECTING A VEHICLE OCCUPANT AND SYSTEM WITH A CONTROL UNIT OF THIS TYPE AND A CORRESPONDING ACTUATOR SYSTEM
PROCÉDÉ POUR PROTÉGER UN OCCUPANT D'UN VÉHICULE, MODULE DE COMMANDE POUR COMMANDER UN DISPOSITIF D'ACTIONNEMENT POUR PROTÉGER UN OCCUPANT D'UN VÉHICULE ET SYSTÈME COMPRENANT UN TEL MODULE DE COMMANDE ET UN DISPOSITIF D'ACTIONNEMENT CORRESPONDANT

(30) Priorität: 12.07.2010 DE 102010031257
(43) Veröffentlichungstag der Anmeldung: 22.05.2013
(73) Patentinhaber: Robert Bosch GmbH, 70442 Stuttgart (DE)
(72) Erfinder: FREIENSTEIN, Heiko, 71263 Weil Der Stadt (DE)
(86) Internationale Anmeldenummer: PCT/EP2011/058239
(87) Internationale Veröffentlichungsnummer: WO 2012/007211

(56) Entgegenhaltungen:
- EP-B1- 1 633 606
- WO-A1-2007/006326
- WO-A1-2008/052609
- DE-A1-102004 057 603
- DE-A1-102004 062 486
- DE-U1-202007 010 364

## Beschreibung

### Stand der Technik

Die Erfindung betrifft ein Verfahren zum Schutz eines Fahrzeuginsassen beziehungsweise ein Steuergerät zur Ansteuerung einer Aktuatorik zum Schutz eines Fahrzeuginsassen nach der Gattung der unabhängigen Patentansprüche. Aus EP 1 633 606 B1 ist ein sitzbasiertes Rückhaltemittel beschrieben, dass durch eine schnelle Verstellung den Sitz in eine crashoptimale Position bringt. Baumann et al: Pre-safe Pulse, die Erweiterung des Insassenschutzes durch Nutzung der Vorunfallphase, Technischer Kongress 2010, VDA beschreibt das Prinzip des aktiven Voranstoßes vor dem Aufprall. Dieser Voranstoß soll den zu schützenden Insassen schon vor dem eigentlichen Aufprall in die Richtung bewegen, in die er beim Hauptanstoß über das Rückhaltesystem ohnehin gestoßen wird. Dies soll die Verletzungsfolgen für den Fahrzeuginsassen hindern.

Die DE 102004062486 A1 offenbart ein Verfahren für ein präventiv wirkendes Schutzsystem in einem Kraftfahrzeug.

Die WO 2008/052609 A1 offenbart ein Verfahren zur Ansteuerung eines Insassenschutzmittels bei einem Fahrzeug mit einer vorausschauenden Umgebungserfassungseinheit.

Die WO 2007/006326 A1 offenbart ein Verfahren und Vorrichtung zur Ansteuerung eines Insassenschutzmittels.

Die DE 10 2004 057 603 A1 offenbart ein Verfahren für ein Sicherheitssystem in einem Fahrzeug.

Die DE 20 2007 010364 U1 offenbart eine Insassenschutzeinrichtung für ein Kraftfahrzeug.

### Offenbarung der Erfindung

Das erfindungsgemäße Verfahren zum Schutz eines Fahrzeuginsassen das erfindungsgemäße Steuergerät zur Ansteuerung einer Aktuatorik zum Schutz einer Fahrzeuginsassen mit den Merkmalen der unabhängigen Patentansprüche haben demgegenüber den Vorteil, dass nunmehr eine optimierte Ansteuerung der Aktuatorik möglich ist, um die Fahrzeuginsassen vor dem Crash in die Crashrichtung zu bewegen. Erfindungswesentlich zeigt sich dabei die Einbeziehung des Bremsvorgangs in die Ansteuerung der Aktuatorik. Damit kann dann beginnende Bewegung des Fahrzeuginsassen durch den Bremsvorgang bei der optimalen Positionierung und Stabilisierung des Fahrzeuginsassen für den eigentlichen Crash berücksichtigt werden. Dies führt zu einem erhöhten Insassenschutz. Damit kann dann gewährleistet werden, dass der Insasse in der richtigen Position sitzt und die gewünschte Vorbeschleunigung durch die Bewegung vor dem eigentlichen Crash aufweist. Dafür kann dann ein Sensorsignal verwendet werden, das den Bremsvorgang charakterisiert und üblicherweise sowieso vorhanden und beispielsweise über den CAN-Bus leicht abrufbar ist.

Der Schutz des Fahrzeuginsassen bedeutet vorliegend, dass der Fahrzeuginsasse gegen einen Aufprall geschützt wird, in dem er möglichst keine oder nur geringere Verletzungen davonträgt.

Die Aktuatorik hat die Aufgabe, den Fahrzeuginsassen in die Crashrichtung vor dem eigentlichen Crash zu bewegen. Daher muss die Aktuatorik genügend Kraft aufwenden zu können, um einen Fahrzeuginsassen bewegen zu können. Dies kann elektromotorisch, pneumatisch oder gar pyrotechnisch erfolgen.

Die Crashrichtung ist die Richtung, die die Kraftwirkung des Crashs beschreibt. Beim Frontcrash ist die Crashrichtung in Richtung auf das Fahrzeugheck gerichtet. Bei einem Seitencrash in die Richtung, mit welcher das Crashobjekt in das Fahrzeug eindringt. In diese Richtung werden üblicherweise die Rückhaltemittel den Fahrzeuginsassen sowieso bewegen. Crash oder Aufprall oder Kollision sind vorwiegend Synonyme.

Mit dem Sensorsignal kann -wie aus den abhängigen Ansprüchen hervorgeht, beispielsweise ein Verzögerungssignal analog oder digital aber auch andere Signale gemeint sein. Das Sensorsignal kann insbesondere auch eine Multiplex von Signalen umfassen.

Die Abhängigkeit, mit der die Aktuatorik vom Sensorsignal angesteuert wird, kann verschiedene Ausprägungen erfahren. Beispielsweise kann das Sensorsignal zunächst ausgewertet werden, beispielsweise Schwellwertvergleiche und dann in Abhängigkeit diesen Auswerteergebnissen die Ansteuerung der Aktuatorik erfolgen. Es ist jedoch auch eine unmittelbare Ansteuerung möglich, in gewissen Werten des Sensorsignals eine bestimmte Aktion beziehungsweise Ansteuerung der Aktuatorik zugewiesen wird. Der Ansteuerung wird vorliegend die Aktivierung der Aktuatorik gemeint, nämlich dass sich die Aktuatorik bestimmungsgemäß bewegt.

Der Bremsvorgang ist durch die Betätigung des Bremspedals entweder durch den Fahrzeuginsassen oder durch das Fahrzeug selbst charakterisiert. Das heißt, so bald die Fahrzeugbremse betätigt wird, beginnt der Bremsvorgang. Dies kann beispielweise durch eine Schwellwertabfrage der Verzögerung erfasst werden. Aber auch ein Bremsschalter, der die Betätigung der Bremse erfasst, usw. kann hierfür verwendet werden, um den Beginn des Bremsvorgangs zu erkennen. Auch ein Pedalweggeber kann vorliegend eingesetzt werden.

Bei dem Steuergerät handelt es sich um ein elektrisches Gerät, das Sensorsignale verarbeitet und in Abhängigkeit davon Ansteuersignale für die Ansteuerung der Aktuatorik zum Schutz der Fahrzeuginsassen ausgibt. Dafür weist das Steuergerät Schnittstellen auf, die zur Bereitstellung von Sensorsignalen oder bereits verarbeiteten Signalen dienen. Diese Schnittstellen können hard- oder softwaremäßig ausgeprägt sein. Liegt eine hardwaremäßige Ausbildung vor, kann dies als eigenes Bauteil vorliegen oder als Teil eines größeren integrierten Schaltkreises.

Bei dem Controller handelt es sich üblicherweise um einen Mikrocontroller, es sind jedoch auch andere Prozessoren und Rechenwerke möglich.

Mit dem Ansteuersignal wird ein Signal verstanden, das angibt, wie die Aktuatorik zu bewegen ist. Dies kann beispielsweise durch einen Befehl erreicht werden, den das Signal aufweist, oder determiniert über einen oder mehrere Signalparameter.

Mit dem System ist eine Kombination aus dem Steuergerät und der Aktuatorik gemeint.

Durch die in den abhängigen Ansprüchen aufgeführten Maßnahmen und Weiterbildungen sind vorteilhafte Verbesserungen des in den unabhängigen Patentansprüchen angegebenen Verfahren zum Schutz eines Fahrzeuginsassen beziehungsweise des Steuergerät zur Ansteuerung einer Aktuatorik zum Schutz des Fahrzeuginsassen möglich.

Vorteilhaft ist, dass das Sensorsignal die Verzögerung, das ist die negative Beschleunigung durch die Bremsung angibt. Insbesondere konnte dies dadurch erfolgen, dass das Sensorsignal Beschleunigungswerte angibt, die auch durch den Bremsvorgang hervorgerufen wurden. Dadurch sind dann Beschleunigungssensoren zu verwenden, die solch niedrigere Beschleunigung erfassen und üblicherweise in einem Fahrdynamiksteuergerät oder auch im modernen Airbagsteuergeräten vorhanden sind.

Weitere ist es vorteilhaft, dass die Aktuatorik zeitgleich mit dem Beginn des Bremsvorgangs angesteuert wird. Damit kann dann die Zeit ausgenutzt werden bis zum eigentlichen Zünden des Airbags, um den Fahrzeuginsassen optimal zu positionieren. Der Beginn des Bremsvorgangs wird durch ein Sensorsignal charakterisiert, beispielsweise in dem die Beschleunigungssignale eine gewisse Schwelle überschreiten oder über die eine Schalter erkennt, dass der Bremsvorgang eingeleitet wird. Auch andere Schwellwertabfragen von Schwellwertsignalen sind hier möglich, beispielsweise von Pedalweggebern.

Darüber hinaus ist es vorteilhaft, dass die Aktuatorik nach einem vorgegebenen Zeitversatz nach dem Bremsvorgang angesteuert wird. Diese Vorgabe dieses Zeitversatzes kann feststehen oder sie kann sich aus den ermittelten Sensorsignalen ergeben. Auch andere Bedingungen wie die verfügbare Rechenzeit usw. können in diesem Zeitversatz berücksichtigt werden.

Weiterhin ist es vorteilhaft, dass als Aktuatorik ein elektromotorisch ansteuerbarer Gurtstraffer verwendet wird. Mit einem solch elektromotorisch ansteuerbaren Gurtstraffer ist es möglich, in kurzer Zeit eine relativ hohe Kraft auf den Fahrzeuginsassen aufzuwenden und ihn damit diesen sogenannten Vorimpuls gezielt zu geben. Eine elektromotorisch ansteuerbare Gurtstraffer ist in dieser Form aus dem Stand der Technik hinlänglich bekannt.

Zusätzlich oder anstatt kann die Aktuatorik auch eine Sitzkomponente nämlich eine kippbare Sitzfläche und eine zumindest schwenkbare Sitzlehne sein. Auch die Sitzfläche kann einen Beitrag zu diesem Vorimpuls auf den Fahrzeuginsassen leisten und die Sitzlehne wird derart positioniert, dass der Fahrzeuginsasse für den Airbag in andere pyrotechnisch oder anders aktivierbare Rückhaltemittel optimal positioniert wird.

Es ist auch vorteilhaft, dass bei der Ansteuerung der Aktuatorik eine von einem Pre-cash-Signal abgeleitete Information über eine Aufprallzeitpunkt berücksichtigt wird. Pre-cash-Signale sind für eine frühzeitige Aktivierung von Insassenschutzmitteln äußert hilfreich, so dass sie bereits im Vorfeld Aufprallprojekte erkennen und charakterisieren. Die Auswertung der Sensorsignale von solchen Pre-cash-Sensoriken wie Radar, Ultraschall, Video usw. ist es möglich, einen Aufprall vorherzusagen und insbesondere den Aufprallzeitpunkt. Dieser wird dann auch im englischen als time-to-impact bezeichnet. Diese Information kann vom Airbagsteuergerät selbst bestimmt werden oder auch von einer anderen intelligenten Auswertung, beispielsweise einem Kamerasteuergerät usw.

Ausführungsbeispiele der Erfindung sind in der nachfolgenden Zeichnung dargestellt und werden in der folgenden Beschreibung näher erläutert.

Es zeigen:
Figur 1 ein Blockschaltbild des erfindungsgemäßen Steuergeräts mit angeschlossenen Komponenten,
Figur 2 ein Zeitablaufdiagramm des erfindungsgemäßen Verfahrens und
Figur 3 ein Flussdiagramm des erfindungsgemäßen Verfahrens

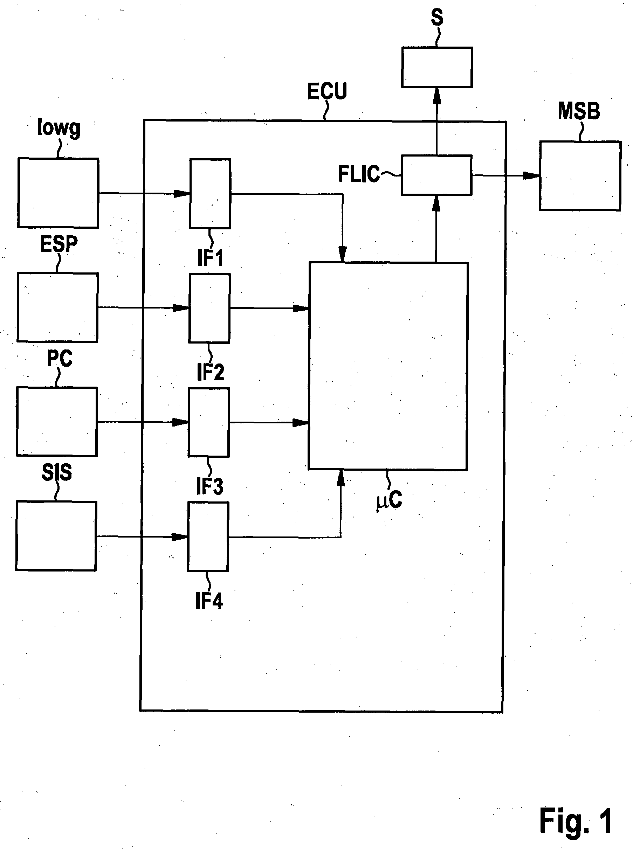

Figur 1 zeigt ein Steuergerät ECU mit angeschlossenen Komponenten. Das Steuergerät ECU weist beispielsweise ein Gehäuse aus Kunststoff und/oder Metall auf, in dem sich verschiedene mechanische und elektronische Komponenten befinden. Dargestellt sind jedoch nur die Komponenten, die für das Verständnis der Erfindung notwendig sind. Die anderen Komponenten sind der einfachheithalber weggelassen. An eine erste Schnittstelle IF1 des Steuergeräts ECU sind sogenannte Nieder-g-Beschleunigungssensoren lowg angeschlossen. Dieser Nieder-g-Beschleunigungssensoren lowg erfassen Beschleunigung in einem Bereich bis zu 3 oder 4g und können so die Verzögerung, die durch Bremsvorgänge auftreten, ausreichend erfassen. Solche Nieder-g-Sensoren lowg können im Steuergerät ECU selbst vorhanden sein, in einem Sensorsteuergerät oder einer Sensorbox oder einem Sensorcluster oder auch einem ESP-Steuergerät. Die Nieder-g-Beschleunigungssensoren lowg übertragen digital ihre Daten zur Schnittstelle IF1. Es sind jedoch auch alle anderen Übertragungsformen möglich, beispielsweise eine drahtlose Übertragung, die, wie auch die kabelgebundene auch analog ausgeführt sein kann. Auch eine Vorverarbeitung kann bereits außerhalb des Steuergeräts ECU erfolgreich sein. Die Schnittstelle IF1, die vorwiegend hardwaremäßig ausgebildet ist, kann Teil eines großen integrierten Schaltkreises sein oder auch Teil des Mikrocontrollers µC selbst. Auch eine softwaremäßige Ausprägung dieser Schnittstelle IF1 oder der anderen Schnittstellen ist möglich.

Über eine zweite Schnittstelle IF2 erhält das Steuergerät ECU Daten von einer Fahrdynamikregelung. Diese können beispielsweise die Daten von den Nieder-g-Sensoren lowg plausibilisieren oder aber auch andere Daten wie beispielsweise bezüglich eines Schleuderns usw.

Über eine dritte Schnittstelle IP3 erhält das Steuergerät ECU von einer Pre-Crash-Sensorik PC ein Precrashsignal, das mögliche Kollisionsgegner charakterisiert, beispielsweise hinsichtlich ihrer Bewegung und eines möglichen Kontaktzeitpunkts mithin des Aufprallzeitpunkts oder Crashzeitpunkts. Auch diese Daten können vorverarbeitet oder als Rohdaten über die Schnittstelle IF3 an den Mikrocontroller µC übertragen werden. Über eine vierte Schnittstelle schließlich IF4 hält der Mikrocontroller µC Daten von einem Sitz SIS beispielsweise in welcher Stellung sich die unterschiedlichen Sitzkomponenten S befinden.

Der Mikrocontroller µC führt nun das erfindungsgemäße Verfahren aus, indem er anhand der Nieder-g-Signale ermittelt, ob ein Bremsvorgang vorliegt und dies beispielsweise anhand von ESP-Daten plausibilisiert. Ist dies der Fall, dann können in der erfindungsgemäßen Weise über den Ansteuerbaustein FLIC die Sitzkomponenten S beziehungsweise den Gurtstraffer MSB erfindungsgemäß ansteuern. Aus dem Pre-Crash Signal erkannt der Mikrocontroller µC, wann es zu einem Aufprall kommen wird. Aus den Daten der Sitzkomponenten S erfährt der Mikrocontroller µC, in welcher Position sich die Sitzkomponenten befinden. Mit all diesen Daten ist es dann dem Mikrocontroller µC möglich, wie, mit welcher Geschwindigkeit und wann die einzelnen Sitzkomponenten und der Gurtstraffer zu betätigen sind, um den Fahrzeuginsassen optimal zu positionieren und mit dem Vorimpuls zu versehen.

Auch der Ansteuerbaustein FLIC, für den das Ansteuersignal an die Sitzkomponenten S beziehungsweise den Gurtstraffer MSB übertragen wird, kann auf einem großen integrierten Schaltkreis als Teil vorhanden sein.

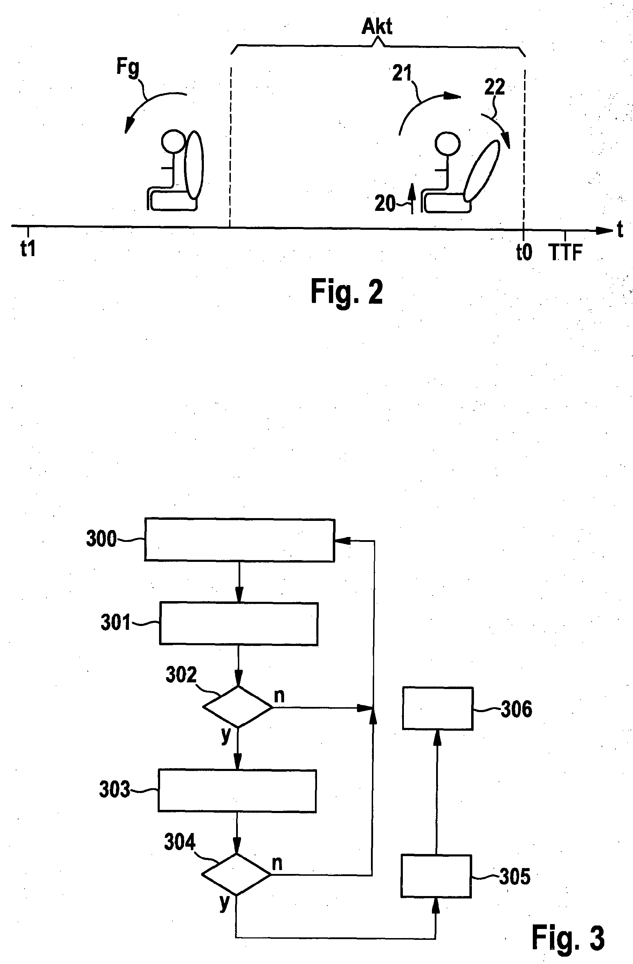

Figur 2 erläutert in einem Zeitablaufdiagramm das erfindungsgemäße Verfahren. Zum Zeitpunkt t1 wird der Beginn des Bremsvorgangs in der oben beschriebenen Weise erkannt. In Folge des Bremsvorgangs und der Trägheit bewegt der Fahrzeuginsasse mit der Kraft Fg nach vorne. Vorliegend wird mit einem Zeitversatz die Aktuatorik Akt angesteuert. Dabei wird die Sitzlehne 22 nach hinten bewegt, der Gurtstraffer aktiviert und die Sitzfläche vorne nach oben gehoben, um in der Richtung 21 den Fahrzeuginsassen mit dem Vorimpuls zu versehen. Die Bewegung der Sitzlehne ist mit 22 bezeichnet und die der Sitzfläche mit 20. Zum Zeitpunkt t0 ist dann der Fahrzeuginsasse optimal positioniert und zum Zeitpunkt ttf erfolgt dann die Zündung der Rückhaltemittel wie Airbags und der pyrotechnischen Gurtstraffer.

Figur 3 erläutert in einem Flussdiagramm das erfindungsgemäße Verfahren. Im Verfahrensschritt 300 werden die Nieder-g-Signale erfasst und im Verfahrensschritt 301 einer Auswertung beispielsweise einer Schwellwertabfrage beziehungsweise Integration unterworfen. Im Verfahrensschritt 302 wird geklärt, ob ein Bremsvorgang vorliegt oder nicht. Ist das nicht der Fall, wird zum Verfahrensschritt 300 zurückgesprungen. Ist das jedoch der Fall, dann wird im Verfahrensschritt 303 das Pre-Crash Signal dahingehend untersucht, wann der Aufprall vorliegt. Es wird also eine Prognose über den Aufprallzeitpunkt gegeben. Mit dieser Prognose wird Verfahrensschritt 304 geklärt, dass ein Aufprall vorliegen wird. Ist das der Fall, wird im Verfahrensschritt 305 die Aktuatorik Akt in der erfindungsgemäßen Art und Weise betätigt. Ist das jedoch nicht der Fall, wird zu Verfahrensschritt 300 zurückgesprungen. Nachdem die Aktuatorik Akt getätigt wurde wird im Verfahrensschritt 306 auch der Airbag usw. aktiviert.

## Patentansprüche

1. Verfahren zum Schutz eines Fahrzeuginsassen, in dem der Fahrzeuginsasse durch eine Aktuatorik (Akt) in eine Crash-Richtung vor dem Crash bewegt wird, wobei als die Aktuatorik Sitzkomponenten, nämlich eine kippbare Sitzfläche (20) und eine zumindest schwenkbare Sitzlehne (22) verwendet werden, wobei die Aktuatorik (Akt) in Abhängigkeit von einer von einem Pre-Crash-Signal abgeleiteten Information über einen Aufprallzeitpunkt angesteuert wird, wobei die Aktuatorik (Akt) in Abhängigkeit von einem Sensorsignal angesteuert wird, das einen Bremsvorgang charakterisiert, wobei die Aktuatorik (Akt) in einem vorgegebenen Zeitversatz nach dem Bremsvorgang angesteuert wird, **dadurch gekennzeichnet, dass** die Aktuatorik (Akt) derart angesteuert wird, dass der Fahrzeuginsasse mit einem Vorimpuls in die Crash-Richtung versehen wird, und dass eine Geschwindigkeit einer Betätigung der einzelnen Sitzkomponenten ansteuerbar ist.

2. Verfahren nach Anspruch 1, **dadurch gekennzeichnet, dass** das Sensorsignal die Verzögerung durch den Bremsvorgang kennzeichnet.

3. Verfahren nach einem der vorhergehenden Ansprüche, **dadurch gekennzeichnet, dass** als die Aktuatorik ein elektromotorisch ansteuerbarer Gurtstraffer (MSB) verwendet wird.

4. Steuergerät (ECU) zur Ansteuerung einer Aktuatorik (S, MSB) zum Schutz eines Fahrzeuginsassen mit:
- einer ersten Schnittstelle (IF1), die ein Sensorsignal bereitstellt, das einen Bremsvorgang charakterisiert,
- einer zweiten Schnittstelle, die eine Information über einen Aufprallzeitpunkt bereitstellt, wobei die Information von einem Pre-Crash-Signal abgeleitet wird,
- einem Controller (µC), der in Abhängigkeit von dem Sensorsignal ein Ansteuerungssignal für die Aktuatorik (S, MSB) erzeugt, das die Aktuatorik (S, MSB) veranlasst, den Fahrzeuginsassen in eine Crashrichtung zu bewegen
- und das dazu ausgebildet ist, ein Verfahren nach einem der Ansprüche 1 bis 3 auszuführen.

5. System mit einem Steuergerät nach Anspruch 4 und eine Aktuatorik, die dazu ausgebildet ist, einen Fahrzeuginsassen in eine Crash-Richtung zu bewegen.

## Claims

1. Method for protecting a vehicle occupant, in which the vehicle occupant is moved in a crash direction by an actuator system (Akt) before the crash, wherein the actuator system used is seat components, namely a tiltable seat area (20) and an at least pivotable backrest (22), wherein the actuator system (Akt) is controlled on the basis of a piece of information, derived from a pre-crash signal, about an instant of impact, wherein the actuator system (Akt) is controlled on the basis of a sensor signal that characterizes a braking process, wherein the actuator system (Akt) is controlled in a prescribed time offset after the braking process, **characterized in that** the actuator system (Akt) is controlled such that the vehicle occupant is provided with a pre-impulse in the crash direction, and **in that** a speed of operation of the individual seat components can be controlled.

2. Method according to Claim 1, **characterized in that** the sensor signal indicates the deceleration by the braking process.

3. Method according to one of the preceding claims, **characterized in that** the actuator system used is a seatbelt pretensioner (MSB) that can be controlled by electric motor.

4. Control unit (ECU) for controlling an actuator system (S, MSB) for protecting a vehicle occupant, having:
- a first interface (IF1) that provides a sensor signal that characterizes a braking process,
- a second interface that provides a piece of information about an instant of impact, wherein the information is derived from a pre-crash signal,
- a controller (µC) that takes the sensor signal as a basis for producing a control signal for the actuator system (S, MSB) that prompts the actuator system (S, MSB) to move the vehicle occupant in a crash direction
- and that is designed to carry out a method according to one of Claims 1 to 3.

5. System having a control unit according to Claim 4 and an actuator system that is designed to move a vehicle occupant in a crash direction.

## Revendications

1. Procédé de protection d'un occupant d'un véhicule, dans lequel l'occupant du véhicule est déplacé avant le crash dans une direction de crash au moyen d'un dispositif d'actionnement (Akt), dans lequel des composants de siège, à savoir une surface d'assise rabattable (20) et au moins un dossier de siège pivotant (22) sont utilisés comme dispositif d'actionnement, dans lequel le dispositif d'actionnement (Akt) est commandé en fonction d'une information déduite d'un signal de pré-crash à un point temporel d'impact, dans lequel le dispositif d'actionnement (Akt) est commandé en fonction d'un signal de capteur, qui caractérise un processus de freinage, dans lequel le dispositif d'actionnement (Akt) est commandé dans un décalage temporel prescrit après le processus de freinage, **caractérisé en ce que** le dispositif d'actionnement (Akt) est commandé de telle sorte que l'occupant du véhicule soit accompagné d'une pré-impulsion dans la direction du crash et **en ce qu'**une vitesse d'un actionnement des composants de siège individuels puisse être commandée.

2. Procédé selon la revendication 1, **caractérisé en ce que** le signal de capteur caractérise la décélération à travers le processus de freinage.

3. Procédé selon une des revendications précédentes, **caractérisé en ce qu'**un tendeur de ceinture (MSB) commandé de manière électromotorisée est utilisé comme dispositif d'actionnement.

4. Appareil de commande (ECU) pour commander un dispositif d'actionnement (S, MSB) afin de protéger les occupants d'un véhicule, comportant :
- une première interface (IF1), qui délivre un signal de capteur qui caractérise un processus de freinage,
- une deuxième interface, qui délivre une information relative au point temporel d'impact, dans lequel l'information est déduite d'un signal de pré-crash,
- un contrôleur (µC), qui génère en fonction du signal de capteur un signal de commande pour le dispositif d'actionnement (S, MSB), qui provoque le dispositif d'actionnement (S, MSB) à déplacer des occupants du véhicule dans une direction de crash,
- et qui est conçu afin de mettre en oeuvre un procédé selon une des revendications 1 à 3.

5. Système comportant un appareil de commande selon la revendication 4 et un dispositif d'actionnement qui est conçu afin de déplacer un occupant du véhicule dans une direction de crash.
